# EUROPÄISCHE PATENTANMELDUNG

(11) **EP 0 840 440 A2**
(43) Veröffentlichungstag der Anmeldung: **06.05.1998**
(21) Anmeldenummer: 97118591.3
(22) Anmeldetag: 25.10.1997
(51) Int. Cl.: H02P 7/29

(54) **Steuerschaltung**

(30) Priorität: 04.11.1996 DE 19645310
(71) Anmelder: Braun Aktiengesellschaft, Frankfurt am Main (DE)
(72) Erfinder: Bauer, Alfred, 63263 Neu-Isenburg (DE)

(57) **Zusammenfassung**

Die Erfindung betrifft eine Steuerschaltung, insbesondere zur Einstellung der Drehzahl eines permanentmagnetisch erregten Gleichstrommotors (M), der von einem ungesteuerten Gleichrichter mit nachgeschaltetem Glättungskondensator (C2) mit Strom versorgt wird. Die Steuerschaltung enthält einen Komparator (K1), dessen Eingänge einerseits mit einer einem Drehzahl-Sollwert entsprechenden Steuerspannung beaufschlagt und andererseits mit einem Integrationsglied (R1, C1) verbunden sind, dessen Integrationskondensator (C1) über einen Widerstand (R1) durch die durch einen Spannungsteiler (R3, R4) heruntergeteilte Spannung einer Gleichspannungsquelle U aufgeladen wird. Zur Verringerung von Netzoberwellen ist das Integrationsglied (R1, C1) zusätzlich über einen Widerstand (R1'; R3') mit einer Referenzspannungsquelle verbunden.

## Beschreibung

Die Erfindung betrifft eine Steuerschaltung zur Ansteuerung einer induktiven Last, insbesondere einen Drehzahlsteller zur Einstellung der Drehzahl eines permanentmagnetisch erregten Gleichstrommotors, der von einem ungesteuerten Gleichrichter mit nachgeschaltetem Glättungskondensator mit Strom versorgt wird. Der Glättungskondensator sorgt dafür, daß in den Zeiträumen der Netzperiode, in denen der Momentanwert der Netzspannung unter einem von der Steuerschaltung minimal benötigten Wert liegt, eine genügend hohe Spannung zur Verfügung steht, die allerdings zwischen einem Maximal- und einem Minimalwert hin- und herschwankt.

Steuerschaltungen mit Pulsbreitenmodulator und schneller Regelung sind in der Lage, diese Schwankungen auszugleichen, so daß der Mittelwert der dem Motor angebotenen Spannung konstant ist, was zu einem gleichförmigen Strom im Motor führt (Spannungsregelung). Alternativ kann der Motorstrom direkt auf einen von einer Führungsgröße vorgegebenen Wert geregelt werden (Stromregelung). Ein gleichförmiger Motorstrom wird deshalb angestrebt, weil er die geringsten Stromwärmeverluste in der Ankerwicklung des Motors verursacht, und sich dabei auch ein besonders gleichförmiger Lauf des Motors einstellt. Allerdings hat eine Stromversorgung mit Gleichrichter und Glättungskondensator den Nachteil, daß der zeitliche Verlauf des dem Stromnetz entnommenen Wechselstroms sehr stark von der Sinusform abweicht und somit stark oberwellenhaltig ist. Darüber hinaus ist bei diesem zeitlichen Verlauf auch der Maximalwert und der Effektivwert des Stroms wesentlich höher als bei einer Sinusform, was innerhalb der Steuerschaltung zu einer höheren Belastung der Bauelemente führt. Um die derzeit gültigen Vorschriften über Netzoberwellen (Harmonics) einhalten zu können, muß daher beispielsweise eine relativ groß dimensionierte Eisendrossel mit Luftspalt vorgesehen werden, die außerdem für den hohen Maximalwert des Netzstroms ausgelegt sein muß.

Wenn man auf den Glättungskondensator hinter dem Gleichrichter verzichtet, hat man zwar die Ursache für die starke Verzerrung des Netzstroms beseitigt, muß aber erhöhte Verluste im Motor in Kauf nehmen. Außerdem muß durch ein Filter, das beispielsweise aus einer kleinen Eisendrossel und einem Folienkondensator bestehen kann, der Anteil der Taktfrequenz des Pulsbreitenmodulators aus dem Netzstrom entfernt werden.

Der Erfindung liegt daher die Aufgabe zugrunde eine Steuerschaltung anzugeben, die mit geringem schaltungstechnischem Aufwand die Einhaltung der obengenannten Vorschriften ermöglicht, und dennoch bei ihrer Verwendung als Drehzahlsteller keine zu starke Erhöhung der Verluste im Motor mit sich bringt.

Aus Fig. 1 der EP-B-0 271 752 ist ein Drehzahlsteller zur Verstellung der Drehzahl eines permanentmagnetisch erregten Gleichstrommotors bekannt, der eine einen ungesteuerten Gleichrichter mit nachgeschaltetem Glättungskondensator enthaltende Stromversorgung und einen Komparator mit Hysterese enthält, dessen Eingänge einerseits mit einer einem Drehzahl-Sollwert entsprechenden Steuerspannung beaufschlagt und andererseits mit dem Ausgang eines Integrationsglieds verbunden sind, dessen Integrationskondensator über einen Widerstand R1 von der durch einen Spannungsteiler heruntergeteilten Versorgungsspannung der Stromversorgung aufgeladen wird. Der Komparator mit Hysterese, im folgenden kurz Komparator K1 genannt, wirkt zusammen mit dem Integrationsglied als Pulsbreitenmodulator. Da diese Schaltung den Mittelwert der Spannung am Ausgang des Integrationsglieds und damit auch die Motorspannung auf einen konstanten Mittelwert regelt, ergibt sich ein Verlauf des Motorstroms mit geringem Ripple und damit verbunden nur geringe Verluste im Motor. Dies hat allerdings einen Netzstrom zur Folge, der relativ starke Oberwellen enthält.

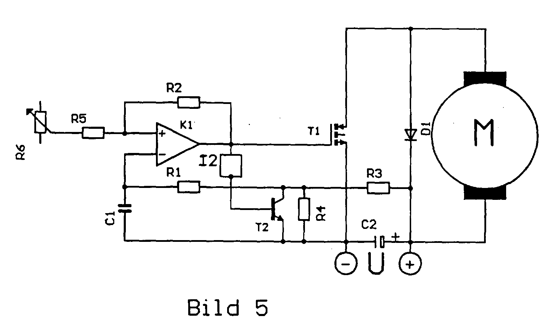

Zunächst wird anhand des obengenannten bekannten Drehzahlstellers, der in Fig. 5 dargestellt ist, die grundlegende Arbeitsweise einer Steuerschaltung beschrieben, nach der auch die erfindungsgemäßen Steuerschaltungen arbeiten.

Die in Fig. 5 dargestellte Schaltungsanordnung zur Verstellung der Drehzahl eines Gleichstrommotors M zeigt ein in Reihe zur Ankerwicklung des Gleichstrommotors M geschaltetes steuerbares Schaltelement T1 in Form eines Leistungs-Feldeffekt-Transistors (FET) oder eines Insulated-Gate-Bipolar-Transistors (IGBT) sowie einer parallel zur Ankerwicklung des Gleichstrommotors M geschalteten Freilaufdiode D1, die entgegengesetzt zur Flußrichtung des Ankerstroms gepolt ist. Eine in Fig. 5 nicht dargestellte Gleichspannungsquelle U, die üblicherweise aus einer an eine einphasige Wechselspannungsquelle angeschlossenen Gleichrichterbrücke besteht, dient sowohl zur Stromversorgung des Gleichstrommotors M als auch einer Steuerschaltung zur Ansteuerung des steuerbaren Schaltelements T1.

Die Steuerschaltung enthält einen Komparator mit Hysterese K1, dessen nicht invertierender Eingang über einen Widerstand R5 mit einer durch ein Potentiometer R6 einstellbaren Sollwertspannung beaufschlagt ist. Zur Erzielung der Hysterese ist der nicht invertierende Eingang des Komparators K1 über einen Widerstand R2 mit dessen Ausgang verbunden. Der invertierende Eingang des Komparators K1 ist an den Verbindungspunkt eines Integrationswiderstands R1 mit einem Integrationskondensator C1 angeschlossen, die zusammen ein Integrationsglied bilden. Der andere Anschluß des Integrationswiderstands R1 ist an den Verbindungspunkt zweier Spannungsteilerwiderstände R4, R3 angeschlossen, die zusammen einen parallel zur Gleichspannungsquelle U geschalteten Spannungsteiler bilden. Der andere Anschluß des Integrationskondensators C1 ist unmittelbar an die negative Klemme der Gleichspannungsquelle angeschlossen.

Parallel zum ersten Spannungsteilerwiderstand R4 und parallel zum Integrationsglied ist die Schaltstrecke eines elektronischen Schalters T2 geschaltet, dessen Steueranschluß über einen Inverter 12 mit dem Ausgang des Komparators K1 verbunden ist. Zusätzlich ist der Ausgang des Komparators K1 unmittelbar mit dem Steueranschluß des steuerbaren Schaltelements T1 verbunden.

Nachstehend wird die Funktionsweise dieser Schaltungsanordnung näher erläutert.

Gemäß der oben beschriebenen Funktion eines Gleichstromstellers zur Verstellung der Drehzahl eines Gleichstrommotors wird mittels des steuerbaren Schaltelements T1 die Ankerwicklung des Gleichstrommotors M in schneller Folge an die Gleichspannungsquelle U geschaltet und wieder von ihr getrennt. Der Ankerstrom fließt dabei abwechselnd über die Schaltstrecke des steuerbaren Schaltelements T1 bei eingeschaltetem steuerbaren Schaltelement T1 oder durch die parallel zur Ankerwicklung geschaltete Freilaufdiode D1 bei abgeschaltetem steuerbaren Schaltelement T1.

Die Ansteuerung des steuerbaren Schaltelements T1 erfolgt mittels der oben beschriebenen Steuerschaltung, die als schnelle Zweipunktregelung arbeitet, bei der die am Spannungsteiler R4, R3 abgegriffene Teilspannung der Gleichspannungsquelle U über den elektronischen Schalter T2 an das Integrationsglied R1, C1 gelegt wird, dessen Zeitkonstante in etwa der Zeitkonstante des Gleichstrommotors entspricht, die aus dem Quotienten der Ankerinduktivität und des Ankerwiderstandes bestimmt wird. Der Zweipunktregler wird durch das Integrationsglied R1, C1 und den Komparator K1 gebildet.

Um den arithmetischen Mittelwert der am Gleichstrommotor M liegenden Spannung über den schnellen Zweipunktregler auf einen gewünschten Sollwert zu regeln, muß die am Gleichstrommotor M liegende Spannung voll oder durch Spannungsteilung über den Spannungsteiler R4, R3 geteilt am Eingang des Zweipunktreglers liegen. Da aber die Motorspannung sich nicht auf das Bezugspotential des Zweipunktreglers (negative Klemme der Gleichspannungsquelle U) bezieht, sondern auf die positive Klemme, wird die am Gleichstrommotor M anliegende Spannung mit Hilfe des elektronischen Schalters T2 nachgebildet, der deshalb im folgenden auch Nachbildungsschaltung genannt wird.

Wenn das steuerbare Schaltelement T1 leitet, liegt die Gleichspannungsquelle U am Gleichstrommotor M und die mittels des Spannungsteilers R4, R3 heruntergeteilte Gleichspannung am Eingang des Zweipunktreglers bzw. am Integrationsglied R1, C1.

Wenn das steuerbare Schaltelement T1 nicht leitet, liegt die Gleichspannungsquelle U nicht am Gleichstrommotor M. Damit nun auch die mittels des Spannungsteilers R4, R3 heruntergeteilte Gleichspannung nicht am Eingang des Zweipunktreglers liegt, wird diese kurzgeschlossen, indem der elektronische Schalter T2, der über dem unteren Spannungsteilerwiderstand R4 liegt, in den leitenden Zustand gesteuert wird.

Somit liegt am Eingang des Zweipunktreglers die heruntergeteilte Motorspannung, d.h. bei geöffnetem elektronischem Schalter T2 liegt die Teilspannung der Gleichspannungsquelle U am Integrationswiderstand R1, während bei geschlossenem elektronischem Schalter T2 negatives oder Massepotential am Integrationswiderstand R1 liegt.

Die somit am invertierenden Eingang des Komparators K1 anliegende integrierte Motor-Teilspannung wird im Komparator mit der den Sollwert der Motorspannung repräsentierenden Steuerspannung verglichen. In Abhängigkeit von diesem Vergleich steht am Ausgang des Komparators K1 ein entsprechendes Steuersignal an oder nicht und führt entsprechend zur Ansteuerung des steuerbaren Schaltelements T1 bzw. über den Inverter 12 zur Ansteuerung des elektronischen Schalters T2.

Infolge der Rückkopplung des Ausgangs des Komparators K1 auf den Steueranschluß des elektronischen Schalters T2 liegt am Eingang des Integrationsgliedes R1, C1 eine impulsförmige Spannung an, deren arithmetischer Mittelwert der Steuerspannung entspricht. Da das steuerbare Schaltelement T1 ebenfalls vom Ausgangssignal des Komparators K1 gesteuert wird, entspricht die am Gleichstrommotor M anliegende Spannung dieser impulsförmigen Spannung, ist jedoch um das Spannungsteilerverhältnis (R4 + R3)/R4 größer. Auf diese Weise verhält sich der Gleichstrommotor M so als wenn er mit einer reinen Gleichspannung betrieben würde, deren Wert dem arithmetischen Mittelwert der Motorspannung entspricht. Dadurch ist bei dieser Schaltungsanordnung der Motorstrom weitestgehend unabhängig von Schwankungen oder Welligkeiten der Gleichspannungsquelle U, und die Motorspannung des Gleichstrommotors M nahezu ausschließlich von der Höhe der Steuerspannung abhängig.

Ausgehend von dieser bekannten Steuerschaltung ist zur Verringerung der Netzoberwellen der Zweipunktregler erfindungsgemäß zusätzlich mit einer Referenzspannungsquelle verbunden.

Dies erfolgt bei einem ersten erfindungsgemäßen Ausführungsbeispiel durch einen Widerstand R3', der den Zweipunktregler mit einer Referenzspannungsquelle verbindet.

Bei einem bevorzugten zweiten erfindungsgemäßen Ausführungsbeispiel ist über einen Widerstand R1' der Integrationskondensator C1 mit dem Ausgang des Pulsbreitenmodulators, also dem Ausgang des Komparators K1 verbunden, dessen Ausgangsspannung somit als Referenzspannung verwendet ist. Der besondere Vorteil dieser Schaltung liegt darin, daß im Vergleich zur eingangs beschriebenen bekannten Schaltung nur ein einziger zusätzlicher Widerstand erforderlich ist, um die gestellte Aufgabe zu lösen.

Bei modifizierten Ausführungen der erfindungsgemäßen Steuerschaltungen ist der elektronische Schalter T2 und der Inverter I2 durch eine Diode D2 ersetzt, die zwischen den Ausgang des Komparators K1 und das Integrationsglied R1, C1 geschaltet ist.

Die Erfindung wird nachstehend anhand von Ausführungsbeispielen erläutert, die in den Zeichnungen dargestellt sind. Es zeigen:
- Fig. 1: ein Schaltbild einer ersten erfindungsgemäßen Steuerschaltung;
- Fig. 2: ein Schaltbild einer zweiten erfindungsgemäßen Steuerschaltung;
- Fig. 3: eine modifizierte Ausführung der Steuerschaltung gemäß Fig. 1;
- Fig. 4: eine modifizierte Ausführung der Steuerschaltung gemäß Fig. 2;
- Fig. 5: den aus der EP-B-0 271 752 bekannten Drehzahlsteller.

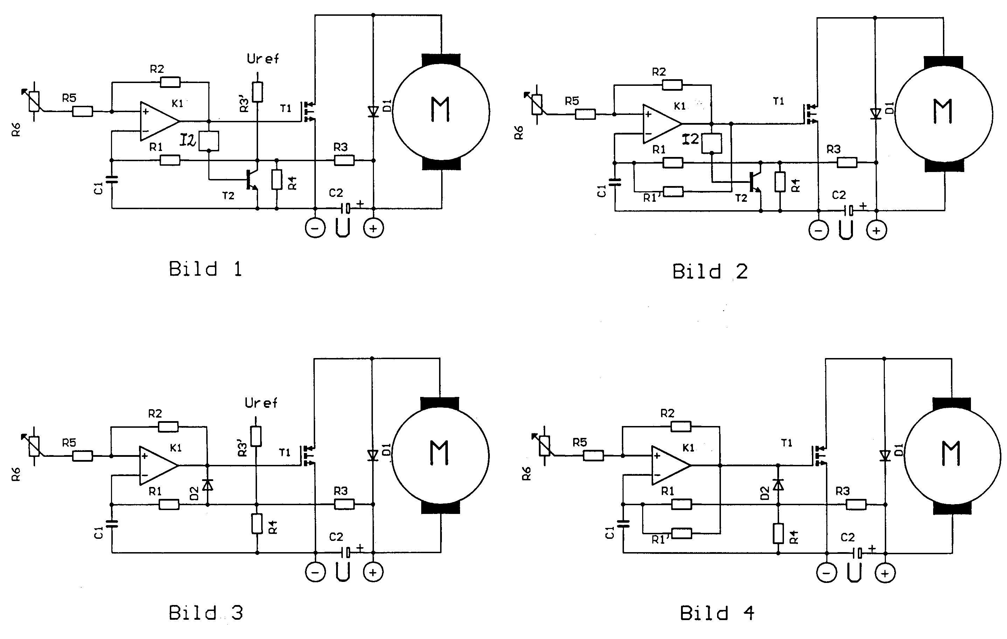

Die erfindungsgemäße erste Steuerschaltung nach Fig. 1 unterscheidet sich von der aus Fig. 5 bekannten Schaltungsanordnung im wesentlichen durch einen Widerstand R3', der dem als Zweipunktregler ausgebildeten Pulsbreitenmodulator eine Referenzspannung Uref einer in Fig.1 nicht dargestellten Referenzspannungsquelle zuführt, die aus der Versorgungsspannung der Gleichspannungsquelle U erzeugt sein kann. Ansonsten entspricht die in Fig. 1 dargestellte erfindungsgemäße Steuerschaltung der aus Fig. 5 bekannten Schaltungsanordnung, wobei für die sich entsprechenden Bauelemente dieselben Bezugszeichen verwendet sind, und wird daher nicht noch einmal beschrieben.

Durch den Widerstand R3' wird dem Integrationsglied R1, C1 zusätzlich zu der durch den Spannungsteiler R4, R3 heruntergeteilten mehr oder weniger pulsierenden Spannung der Gleichspannungsquelle U noch die praktisch konstante Spannung Uref der Referenzspannungsquelle zugeführt. Dadurch liegt am Eingang des Pulsbreitenmodulators eine weniger pulsierende Spannung an als am die Last bildenden Gleichstrommotor M, d.h. die erfindungsgemäße Steuerschaltung regelt die Welligkeiten der von der Gleichspannungsquelle U abgegebenen Gleichspannung nicht vollständig aus. Dadurch ist aber eine größere Kontinuität der Stromentnahme aus dem Stromnetz verbunden, und die auf das Stromnetz rückwirkenden Oberwellen sind daher stark verringert. Zwar wird der Gleichstrommotor M nun mit einem leicht welligen Gleichstrom betrieben, jedoch ist dies in begrenztem Umfang durchaus tolerierbar. Je nach Wahl der Widerstandswerte von R3 und R3' ist diese Wirkung stärker oder schwächer ausgeprägt.

Die erfindungsgemäße zweite Steuerschaltung nach Fig. 2 unterscheidet sich von der aus Fig. 5 bekannten Schaltungsanordnung nur durch einen Widerstand R1', der den Verbindungspunkt des Integrationskondensators C1 und des invertierenden Eingangs des Komparators K1 mit dessen Ausgang verbindet. Ansonsten entspricht die in Fig. 2 dargestellte erfindungsgemäße Steuerschaltung der aus Fig. 5 bekannten Schaltungsanordnung, wobei für die sich entsprechenden Bauelemente dieselben Bezugszeichen verwendet sind, und wird daher ebenfalls nicht noch einmal beschrieben.

Die Wirkungsweise der zweiten erfindungsgemäßen Steuerschaltung ist ähnlich wie die der im Zusammenhang mit Fig. 1 beschriebenen ersten erfindungsgemäßen Steuerschaltung, jedoch wird statt der Referenzspannung Uref der Referenzspannungsquelle einfach die Ausgangsspannung des Pulsbreitenmodulators verwendet. Da diese Ausgangsspannung laufend zwischen den Zuständen "high" und "low" hin und her wechselt, entspricht sie eigentlich nur im Zustand "high" der vom ersten Ausführungsbeispiel her bekannten Referenzspannung Uref. Im Zustand "high", wenn also das steuerbare Schaltelement T1 eingeschaltet ist und der Gleichstrommotor M an der Gleichspannungsquelle U liegt, ist der elektronische Schalter T2 offen, sodaß der Integrationskondensator C1 über den Widerstand R1' durch die als Referenzspannung dienende Ausgangsspannung des Komparators K1 und zusätzlich über den Widerstand R1 durch die Spannung an der Nachbildungsschaltung aufgeladen wird. Wenn sich die Ausgangsspannung im Zustand "low" befindet, liegt der Gleichstrommotor M nicht an der Gleichspannungsquelle U, weil dann das steuerbare Schaltelement T1 ausgeschaltet ist, und der Integrationskondensator C1 entlädt sich über den Widerstand R1' und zusätzlich über den Widerstand R1, weil dann der elektronische Schalter T2 geschlossen ist.

Bei den modifizierten Ausführungen der erfindungsgemäßen Steuerschaltungen, die in den Figuren 3 und 4 dargestellt sind, sind der elektronische Schalter T2 und der Inverter I2 durch eine Diode D2 ersetzt, deren Kathode mit dem Ausgang des Pulsbreitenmodulators und deren Anode mit dem Verbindungspunkt der Spannungsteilerwiderstände R3 und R4 verbunden ist. Befindet sich die Ausgangsspannung des Pulsbreitenmodulators im Zustand "low", d.h. auf Masse- bzw. Bezugspotential, wird die Spannung am Spannungsteiler R3/R4 durch die Diode D2 kurzgeschlossen. Befindet sich die Ausgangsspannung des Pulsbreitenmodulators jedoch im Zustand "high", wird diese Spannung nicht durch die Diode D2 kurzgeschlossen. Somit wirkt die Diode D2 in gleicher Weise wie der Transistor T2 und der Inverter I2 bei den in den Figuren 1 und 2 dargestellten erfindungsgemäßen Ausführungsbeispielen.

## Patentansprüche

1. Steuerschaltung zur Ansteuerung einer induktiven Last, insbesondere zur Einstellung der Drehzahl eines permanentmagnetisch erregten Gleichstrommotors, mit einer einen ungesteuerten Gleichrichter mit nachgeschaltetem Glättungskondensator (C2) enthaltenden Gleichspannungsquelle (U), einer Nachbildungsschaltung für die Spannung an der induktiven Last und einem Pulsbreitenmodulator, dessen Eingänge einerseits mit einer einem Sollwert entsprechenden Steuerspannung und andererseits mit der über einen Spannungsteiler (R3, R4) heruntergeteilten Spannung der Gleichspannungsquelle (U) beaufschlagt sind,
**dadurch gekennzeichnet,**
daß dem Pulsbreitenmodulator zusätzlich eine Referenzspannung (Uref) einer Referenzspannungsquelle zugeführt ist.

2. Steuerschaltung nach Anspruch 1,
**dadurch gekennzeichnet**,
daß als Referenzspannung (Uref) die Ausgangsspannung des Pulsbreitenmodulators verwendet ist.

3. Steuerschaltung nach Anspruch 1 oder 2,
**dadurch gekennzeichnet,**
daß der Pulsbreitenmodulator einen Komparator mit Hysterese (K1) oder Schmitt-Trigger enthält.

4. Steuerschaltung nach einem der vorhergehenden Ansprüche,
**dadurch gekennzeichnet,**
daß die induktive Last mittels eines steuerbaren Schaltelements (T1) ansteuerbar ist, das vom Ausgangssignal des Pulsbreitenmodulators gesteuert und in Reihe zur induktiven Last und der Gleichspannungsquelle (U) geschaltet ist.

5. Steuerschaltung nach einem der vorhergehenden Ansprüche,
**dadurch gekennzeichnet,**
daß die induktive Last aus einem Gleichstrommotor (M) und einer parallel zur Ankerwicklung des Gleichstrommotors geschalteten Freilaufdiode (D1) besteht.

6. Steuerschaltung nach Anspruch 4 oder 5,
**dadurch gekennzeichnet,**
daß sie ferner einen elektronischen Schalter (T2; D2) enthält, der vom Ausgangssignal des Pulsbreitenmodulators derart gesteuert ist, daß der elektronische Schalter (T2; D2) immer den umgekehrten Schaltzustand wie das steuerbare Schaltelement (T1) aufweist.

7. Steuerschaltung nach Anspruch 6,
**dadurch gekennzeichnet,**
daß der elektronische Schalter (T2) aus einem Transistor besteht, dessen Schaltstrecke parallel zum Integrationsglied (R1, C1) geschaltet ist, und dessen Steueranschluß das Ausgangssignal des Pulsbreitenmodulators über einen Inverter (I2) zugeführt ist.

8. Steuerschaltung nach Anspruch 6,
**dadurch gekennzeichnet,**
daß der elektronische Schalter (D2) aus einer Diode besteht, die zwischen den Ausgang des Pulsbreitenmodulators und das Integrationsglied (R1, C1) geschaltet ist.

9. Steuerschaltung nach einem der vorhergehenden Ansprüche,
**dadurch gekennzeichnet,**
daß dem Pulsbreitenmodulator mit Hilfe des elektronischen Schalters (T2; D2) über das Integrationsglied (R1, C1) eine Spannung zugeführt wird, die die am Gleichstrommotor (M) anliegende Spannung nachbildet.
